Europäisches Patentamt

European Patent Office

Office européen des brevets

(19)

(11) Veröffentlichungsnummer: **0 085 844**
**B1**

# (12) EUROPÄISCHE PATENTSCHRIFT

(45) Veröffentlichungstag der Patentschrift:
02.05.85

(21) Anmeldenummer: 83100269.6

(22) Anmeldetag: 14.01.83

(51) Int. Cl.⁴: **G 02 B 7/14**, G 02 B 21/02,
G 02 B 21/24

(54) **Befestigung von Mikroskopobjektiven.**

(30) Priorität: 27.01.82 DE 3202461

(43) Veröffentlichungstag der Anmeldung:
17.08.83 Patentblatt 83/33

(45) Bekanntmachung des Hinweises auf die Patenterteilung:
02.05.85 Patentblatt 85/18

(84) Benannte Vertragsstaaten:
AT CH DE GB LI

(56) Entgegenhaltungen:
DE - A - 2 849 932
DE - B - 1 810 353
DE - C - 922 974
DE - U - 1 747 686

(73) Patentinhaber: Firma Carl Zeiss, D-7920 Heidenheim
(Brenz) (DE)

(72) Erfinder: Esswein, Karlheinz, Max-Planck-Strasse 8,
D-7080 Aalen-Unterkochen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Aufnahme zur auswechselbaren Befestigung von Objektiven an Mikroskopen.

Mikroskopobjektive tragen durchweg ein Feingewinde, mit dem sie an dem Revolver des Mikroskops angeschraubt werden. Ausschliesslich diese Art der Befestigung ist seit über einem Jahrhundert für Mikroskopobjektive gewählt worden, da sie die gestellten Anforderungen u.a. an einen zentriergenauen Sitz des Objektivs sehr gut erfüllt. Bei einer Schraubbefestigung ist die Winkellage des eingeschraubten Teils nicht festgelegt, so dass z.B. Beschriftungen auf dem Objektivgehäuse nach dem Einschrauben in den Objektivrevolver oft nicht mehr lesbar sind. Dieser Nachteil wurde bisher ebenso wie der relativ umständliche Vorgang des Einschraubens stets in Kauf genommen.

In anderen Bereichen der Optik, beispielsweise der Photooptik, ist es seit langem bekannt, die Objektive mit einer sogenannten Bajonettbefestigung an die betreffende Kamera anzusetzen. Die Bajonettbefestigung ermöglicht ein rasches Wechseln des Objektivs und sorgt auch dafür, dass das Objektiv stets in der gleichen Winkellage verriegelt wird, damit z.B. Betätigungseinrichtungen und Skalen für Blende, Entfernung etc. immer an gleicher Stelle dem Benutzer zugänglich sind.

Hinsichtlich der Zentriergenauigkeit werden an die Befestigung eines Photoobjektivs jedoch sehr viel geringere Anforderungen gestellt, als an die Befestigung eines Mikroskopobjektivs, da im ersteren Falle die Filmebene direkt hinter dem Objektiv liegt und ein Versatz des Bildes auf dem zu belichtenden Filmmaterial in der Regel keine Auswirkungen hat. Bajonettbefestigungen für photographische Wechselobjektive besitzen daher ebene Anlageflächen, an die das Objektiv mit entsprechenden Gegenflächen durch Federmittel im Zuge der Einrenkbewegung angepresst wird.

In Mikroskopen folgt auf das Objektiv eine nicht unerhebliche Anzahl weiterer optischer Elemente, deren Achsen mit der des Objektivs exakt fluchten müssen, wenn die Qualität des mikroskopischen Bildes nicht gemindert werden soll. Aus diesem Grunde ist die Übernahme einer für Photoobjektive geeigneten Bajonettverriegelung auf Mikroskopobjektive nicht ohne weiteres möglich.

Der vorliegenden Erfindung liegt die Aufgabe zugrunde, eine einfach und schnell handhabbare Befestigung für Mikroskopobjektive zu schaffen, die das Objektiv in einer festgelegten Winkellage zentriergenau am Mikroskopgehäuse verriegelt. Diese Aufgabe wird durch die im Kennzeichen des Hauptanspruches angegebenen Massnahmen gelöst.

Der Vorteil eines mit einer derartigen Aufnahme ausgerüsteten Mikroskops für den Benutzer ist in der durch die Bajonettbefestigung erzielten schnellen und bequemen Wechselmöglichkeit zu sehen, die lediglich eine Drehung des Objektivs um maximal etwa 90° erfordert.

Der Zentrierkegel garantiert in der Verbindung mit der konischen Öffnung der Bajonettverriegelung auf einfache Weise die genaue Zentrierung und die Einhaltung der Bildlage am Mikroskop.

Da die Winkellage des Objektivs durch das Bajonett festgelegt ist, befindet sich nicht nur die Beschriftung des Objektivs immer an der gleichen Stelle, zusätzlich ergibt sich die Möglichkeit am Objektiv technische Daten z.B. die Abbildungsleistung (Massstab, Apertur etc.) betreffend zu codieren, die dann von einer am Mikroskop befestigten Leseeinrichtung erfasst und zur Steuerung von Gerätefunktionen wie Blenden, Anzeigevorrichtungen etc. verwendet werden. Dies ist bei einer Schraubbefestigung des Objektivs nur unter grossen Schwierigkeiten realisierbar.

Die Codierung selbst kann beispielsweise durch elektrische Kontakte, über mechanische Schalter oder eine optische Abtastung erfolgen, wobei sie vorteilhaft durch eine Leseeinrichtung erfasst wird, mit der sich die Codierung entweder in Arbeitsstellung des Objektivs statisch oder beim Einschwenken des an einem Revolver befestigten Objektivs in die Arbeitsposition dynamisch lesen lässt.

Weitere vorteilhafte Ausbildungen der Erfindung sind in den Unteransprüchen der Erfindung beschrieben und werden nachstehend anhand der Fig. 1 bis 5 der beigefügten Zeichnungen näher erläutert:

Fig. 1 stellt einen Schnitt durch ein gemäss der Erfindung an einem Revolver befestigtes Mikroskopobjektiv dar;

Fig. 2 zeigt die Befestigung gemäss Fig. 1 in Aufsicht;

Fig. 3 stellt eine Schnittzeichnung durch das zusätzlich um eine Leseeinheit für eine Codierung erweiterte Ausführungsbeispiel aus Fig. 1 dar;

Fig. 4b stellt eine Schnittzeichnung eines Teilbereichs der Fig. 1 mit einer zweiten Ausführungsform einer Leseeinrichtung dar;

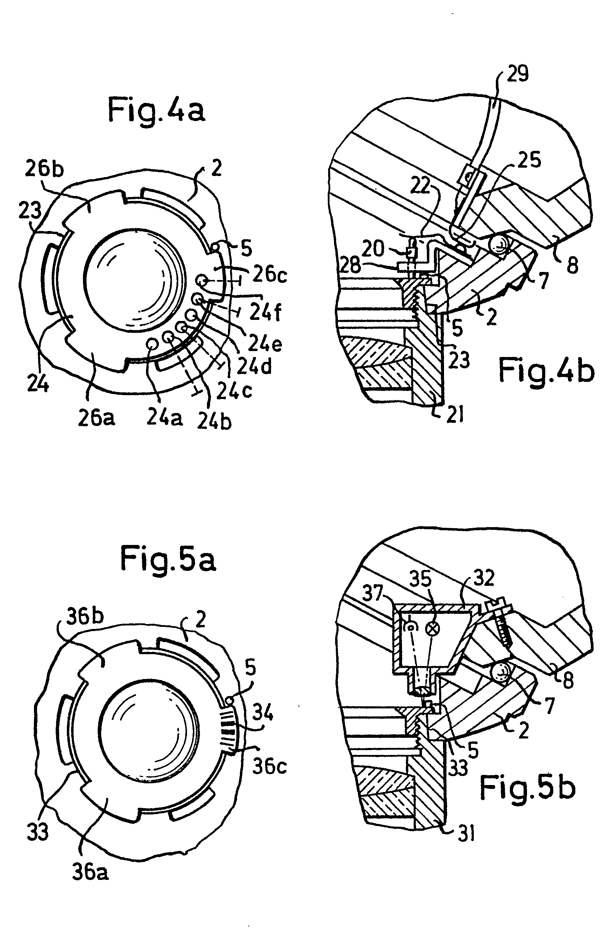

Fig. 4a zeigt das Objektiv aus Fig. 4b in Aufsicht;

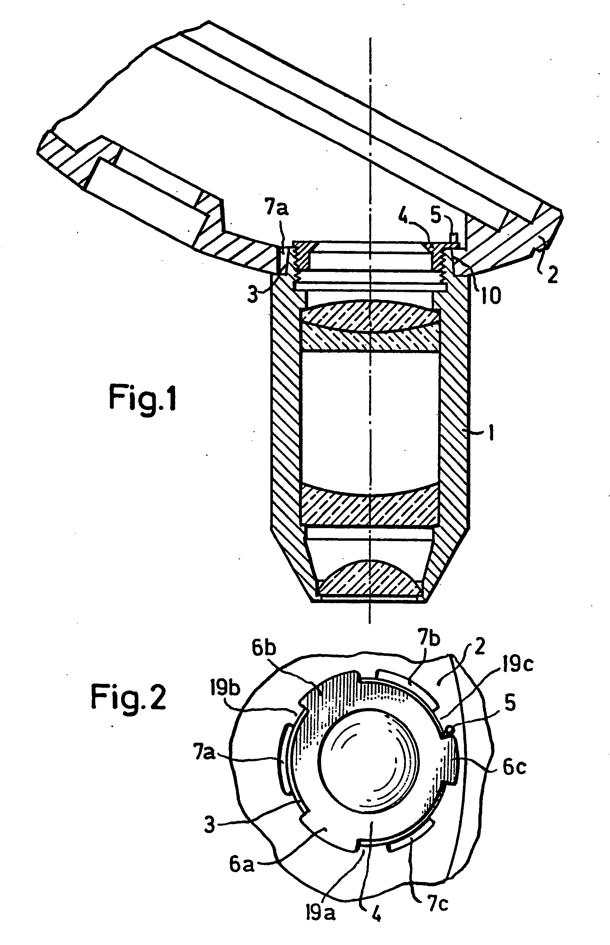

Fig. 5b stellt eine Schnittzeichnung eines Teilbereichs der Fig. 1 mit einer dritten Ausführungsform einer Leseeinrichtung dar, und

Fig. 5a zeigt das Objektiv aus Fig. 5b in Aufsicht.

In Fig. 1 ist mit 1 ein Mikroskopobjektiv bezeichnet, das bildseitig eine kegelige Anlagefläche 3 besitzt und einen Schraubeinsatz 4 trägt, der, wie Fig. 2 zeigt, drei radial abstehende Lappen 6 a-c aufweist. Diese Lappen 6 a-c bestehen aus federndem Material und besitzen eine etwas unsymmetrische Form, die sicherstellt, dass das Objektiv 1 nur in einer einzigen Stellung mit den Lappen 6 durch die drei entsprechenden Ausnehmungen 7 a-c in der konischen Öffnung 10 des Objektivrevolvers 2 eingeführt werden kann. Die Befestigung des Objektivs 1 am Revolver 2 des nicht dargestellten Mikroskops erfolgt durch Verdrehen des Objektivs 1 nach dem Einführen, wobei die federnden Lappen 6 a-c auf der als Rampe ausgebildeten Innenseite der Schultern 19 des Revolvers 2 verbogen werden und das Objektiv mit der kegeligen Fläche 3 fest an konische Gegenfläche im Revolver 2 anlegen. Der Anschlag 5 begrenzt diese Einrenkbewegung.

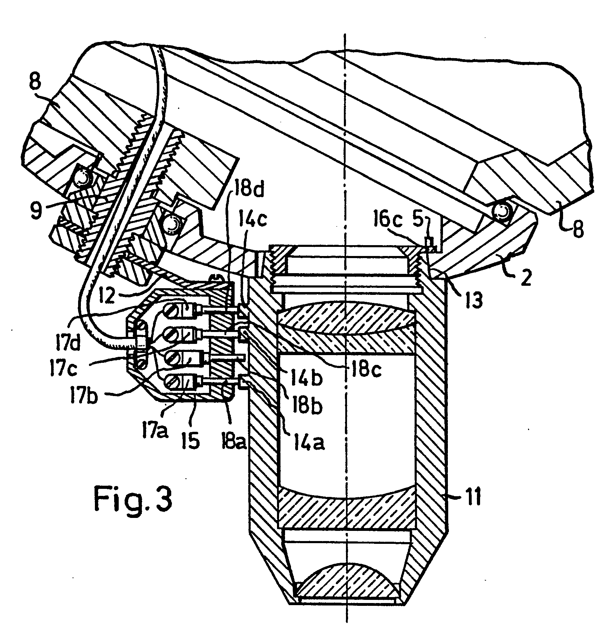

Fig. 3 zeigt eine Ausführungsform, bei der das Objektiv 11 an einer Stelle seines Aussenumfanges untereinander angeordnet mehrere Erhebungen 14 a-c besitzt, die eine Codierung bilden, welche beispielsweise den Abbildungsmassstab und die Apertur des Objektivs umschreibt. Diese Codierung wird durch eine Leseeinrichtung 15 erfasst, die mit einem Bügel 12 an der gehäusefesten hohen Achse 9 befestigt ist, um die der Revolver 2 drehbar ist. Die Darstellung zeigt das Objektiv 11 in Arbeitsstellung geschwenkt.

Die Leseeinrichtung 15 enthält vier Mikroschalter 17 a-d, die über beweglich geführte Stifte 18 a-d beim Einschwenken des Objektivs 11 von den aussen angebrachten Erhebungen 14 betätigt werden. Ein Kabel leitet die binäre Information von der Leseeinheit 15 durch die Hohlachse 9 zu einer nicht dargestellten, am gerätefesten Teil 8 des Mikroskops befestigten Steuereinheit zur Einstellung z.B. der Aperturblende auf einen der Objektivapertur entsprechenden Wert.

Das in Fig. 4 dargestellte Objektiv 21 trägt als alternative Ausführungsform elektrische Kontakte 27 a-f, die entweder isoliert oder gegen Masse geschaltet sind und dadurch einen digitalen Code bilden, der über in einem Bügel 28 beweglich gelagerte Kontaktstifte an die federnden Enden 22 einer im Revolver 2 befestigten Kontaktleiste weitergegeben wird. Jede der Objektivaufnahmen im Revolver 2 trägt eine solche Kontaktleiste.

Am gehäusefesten Teil 8 im Revolverträger des Mikroskops ist eine Leseeinrichtung bestehend aus ebenfalls fünf Federkontakten 25 angebracht, die die Codierung des gerade in Arbeitsstellung befindlichen Objektivs 21 an eine gehäusefeste Steuereinheit weiterleiten.

Während die vorstehend beschriebenen Ausführungsbeispiele Objektive mit einem statisch elektrisch bzw. mechanisch lesbaren Code zeigen, ist in Fig. 5 eine Version beschrieben, bei der der auf dem Federlappen 36 c des Objektivs 31 aufgebrachte Strichcode optisch und zwar dynamisch beim Hindurchschwenken des im Revolver 2 befestigten Objektivs unter der Optik der gerätefest montierten Leseeinheit 32 abgetastet wird. Bei der Leseeinrichtung 32 handelt es sich um eine Reflexlichtschranke herkömmlicher Bauart, die eine Lichtquelle (Photodiode) 35 und einen photoelektrischen Empfänger 37 enthält. Dessen beim Durchschwenken des Revolvers 2 erzeugten Ausgangsignale werden einer mit einem Speicher versehenen Auswerteeinheit ebenfalls bekannter Bauart zugeleitet, auf deren Darstellung hier verzichtet werden kann.

## Patentansprüche

1. Aufnahme zur auswechselbaren Befestigung von Objektiven an Mikroskopen, dadurch gekennzeichnet, dass die Aufnahme als Bajonettverriegelung (5-7) ausgebildet ist und das Objektivgehäuse (1, 11, 21, 31) einen Zentrierkegel (3, 13, 23, 33) trägt, der in eine entsprechende konische Öffnung (10) im Mikroskopgehäuse (Revolver 2) eingreift.

2. Aufnahme nach Anspruch 1, dadurch gekennzeichnet, dass die Bajonettverriegelung aus drei nicht gleichartig geformten, am Objektivgehäuse befestigten, radial abstehenden, federnden Lappen (6 a-c) besteht, die nach Durchführung durch entsprechende Ausnehmungen (7 a-c) in der konischen Öffnung (10) des Mikroskopgehäuses dort zur Anlage mit die Öffnung (10) begrenzenden Schultern (19 a-c) kommen.

3. Aufnahme nach den Ansprüchen 1 und 2, dadurch gekennzeichnet, dass das Objektivgehäuse (11, 21) eine Codierung (14, 24) trägt, die in Arbeitsstellung des Objektivs durch eine gehäusefeste Leseeinrichtung (15, 25) erfasst wird.

4. Aufnahme nach Anspruch 3, dadurch gekennzeichnet, dass ein Objektivrevolver vorgesehen ist, der für jede Objektivaufnahme eine Übertragungseinrichtung (20, 22, 28) für die an den Objektiven (21) angebrachte Codierung (24) zu der gehäusefesten Leseeinrichtung (25) besitzt.

5. Aufnahme nach den Ansprüchen 3 und 4, dadurch gekennzeichnet, dass die Codierung (24) aus elektrischen Kontakten (24 a-f) besteht, die von der Leseeinrichtung (25) statisch abgegriffen werden.

6. Aufnahme nach den Ansprüchen 3 und 4, dadurch gekennzeichnet, dass die Codierung durch Erhebungen (14) bzw. Vertiefungen am Objektivgehäuse gebildet ist, die Schalter (17) in der Leseeinrichtung (15) betätigen.

7. Aufnahme nach den Ansprüchen 2 bis 4, dadurch gekennzeichnet, dass eine optische Codierung (34) verwendet ist, die auf die Federlappen (36 c) des Objektivs (31) aufgebracht ist.

8. Aufnahme nach Anspruch 7, dadurch gekennzeichnet, dass die Leseeinrichtung aus einer gerätefesten Reflektionslichtschranke (32) besteht, die die Codierung (34) auf den Objektiven (31) beim Vorbeischwenken infolge Drehung des Revolvers (2) erfasst.

9. Aufnahme nach den Ansprüchen 3 bis 8, dadurch gekennzeichnet, dass die Codierung (14, 24, 34) eine Information über technische Daten des Objektivs beinhaltet.

## Claims

1. A mount for the replaceable attachment of objectives to microscopes, characterized by the fact that the mount is developed as a bayonet lock (5-7) and the objective housing (1, 11, 21, 31) has a centering cone (3, 13, 23, 33) which engages into a corresponding conical opening (10) in the microscope housing (turret 2).

2. A mount according to Claim 1, characterized by the fact that the bayonet lock consists of three non-identically shaped radially protruding resilient lugs (6 a-c) which are fastened to the objective housing and, after they have been passed through corresponding recesses (7 a-c) in the conical opening (10) of the microscope housing, come to rest there against the shoulders (19 a-c) which define the opening (10).

3. A mount according to Claims 1 and 2, characterized by the fact that the objective housing (11, 21) bears a coding (14, 24) which is read in the working position of the objective by a reading device (15, 25) which is fastened to the housing.

4. A mount according to Claim 3, characterized by the fact that an objective turret is provided which, for each objective mount, has a device (20, 22, 28) for transferring the coding (24) arranged on the objectives (21) to the reading device (25) which is fastened to the housing.

5. A mount according to Claims 3 and 4, characterized by the fact that the coding (24) consists of electrical contacts (24 a-f) which are statically tapped by the reading device (25).

6. A mount according to Claims 3 and 4, characterized by the fact that the coding is formed by elevations (14) or depressions on the objective housing which actuate switches (17) in the reading device (15).

7. A mount according to Claims 2 to 4, characterized by the fact that an optical coding (34) is used, arranged on the resilient lugs (36 c) of the objective (31).

8. A mount according to Claim 7, characterized by the fact that the reading device consists of a reflection light barrier (32) which is fastened to the housing and detects the coding (34) on the objectives (31) when swung past it as a result of rotation of the turret (2).

9. A mount according to Claims 3 to 8, characterized by the fact that the coding (14, 24, 34) contains information concerning technical data of the objective.

## Revendications

1. Dispositif de réception pour fixer des objectifs de façon interchangeable sur des microscopes, caractérisé en ce qu'il est réalisé comme un joint à baïonnette (5-7) et en ce que le corps de l'objectif (1, 11, 21, 31) porte un cône de centrage (3, 13, 23, 33) qui pénètre dans une ouverture conique (10) correspondante du bâti (revolver 2) du microscope.

2. Dispositif de réception selon la revendication 1, caractérisé en ce que le joint à baïonnette est constitué de trois pattes élastiques (6 a-c) radialement saillantes, fixées au corps d'objectif et ne possédant pas la même forme, qui, après avoir été passées par des évidements (7 a-c) correspondants dans l'ouverture conique (10) du bâti du microscope, viennent y buter contre des épaulements (19 a-c) délimitant l'ouverture (10).

3. Dispositif de réception selon les revendications 1 et 2, caractérisé en ce que le corps d'objectif (11, 21) porte un code (14, 24) qui est lu par un dispositif de lecture (15, 25) solidaire du bâti en position de travail de l'objectif.

4. Dispositif de réception selon la revendication 3, caractérisé en ce qu'un revolver à objectifs est prévu, qui possède pour chaque dispositif de réception d'objectif un dispositif de transmission (20, 22, 28) pour transmettre le code (24) apposé aux objectifs (21) au dispositif de lecture (25) solidaire du bâti.

5. Dispositif de réception selon les revendications 3 et 4, caractérisé en ce que le code (24) est constitué de contacts électriques (24 a-f) qui sont lus à l'arrêt par le dispositif de lecture (25).

6. Dispositif de réception selon les revendications 3 et 4, caractérisé en ce que le code est constitué de protubérances (14) ou de creux sur le corps d'objectif qui actionnent des commutateurs (17) dans le dispositif de lecture (15).

7. Dispositif de réception selon les revendications 2 à 4, caractérisé en ce qu'un code optique (34) est utilisé qui est apposé sur les pattes élastiques (36 c) de l'objectif (31).

8. Dispositif de réception selon la revendication 7, caractérisé en ce que le dispositif de lecture est constitué d'une barrière lumineuse à réflexion (32) solidaire de l'appareil qui lit le code (34) sur les objectifs (31) lorsqu'il pivote devant lui par suite de la rotation du revolver (2).

9. Dispositif de réception selon les revendications 3 à 8, caractérisé en ce que le code (14, 24, 34) renferme une information sur des données techniques de l'objectif.

Fig.1

Fig.2

Fig. 3

0 085 844

Fig.4a

Fig.4b

Fig.5a

Fig.5b

9